# EUROPÄISCHE PATENTSCHRIFT

(11) **EP 2 047 912 B1**
(45) Veröffentlichungstag und Bekanntmachung des Hinweises auf die Patenterteilung: **29.12.2010**
(21) Anmeldenummer: 08017173.9
(22) Anmeldetag: 30.09.2008
(51) Int. Cl.: B05B 1/16, B08B 3/02, F16K 11/085, B05B 13/02

(54) **Umschaltvorrichtung für Hochdruckwerkzeuge**
Turret for high pressure machine tools
Barillet d'outils pour dispositif haute pression

(30) Priorität: 09.10.2007 DE 102007050354
(43) Veröffentlichungstag der Anmeldung: 15.04.2009
(73) Patentinhaber: Dürr Ecoclean GmbH, 70794 Filderstadt (DE)
(72) Erfinder: David, Hermann-Josef, 52156 Monschau (DE)
(74) Vertreter: Hoeger, Stellrecht & Partner Patentanwälte

(56) Entgegenhaltungen:
- EP-A- 0 669 187
- EP-A- 1 897 620
- WO-A-03/047760
- WO-A1-94/19116
- DE-A1- 1 602 123
- DE-A1- 2 540 454
- DE-A1-102004 022 589
- DE-U1- 29 612 193
- GB-A- 2 347 097
- US-A- 3 429 508

## Beschreibung

Die vorliegende Erfindung betrifft Hochdruckanlagen zur Reinigung und/oder Bearbeitung, insbesondere Entgratung, von Werkstücken mittels eines unter hohem Druck stehenden fluiden Mediums.

Bei bekannten Hochdruckanlagen sind die Hochdruckwerkzeuge in einer Arbeitskammer verteilt angeordnet und über außerhalb der Arbeitskammer angeordnete Hochdruckventile mit einer Hochdruckmedium-Quelle verbunden. Ein Handhabungsgerät oder Manipulator, beispielsweise ein Roboter, führt das zu reinigende oder zu bearbeitende Werkstück nacheinander verschiedenen Hochdruckwerkzeugen zu, wofür viel Zeit erforderlich ist.

Außerdem werden die Hochdruckwerkzeuge aufgrund der beschränkten Platzverhältnisse häufig an den Gehäusewänden der Arbeitskammer angebracht, wodurch Positionierungenauigkeiten durch die Wärmeausdehnung des Arbeitskammergehäuses entstehen.

Die verschiedenen Hochdruckwerkzeuge werden durch Umschaltung der jeweils zugeordneten Hochdruckventile von einem Ruhezustand in einen Arbeitszustand, in welchem die Hochdruckwerkzeuge von dem Hochdruckmedium durchströmt werden, und von dem Arbeitszustand zurück in den Ruhezustand umgeschaltet. Jeder dieser Umschaltvorgänge nimmt einige Sekunden in Anspruch, da die Umschaltung nur dann erfolgen darf, wenn zuvor ein druckloser Bypass eingeschaltet wurde. Außerdem sind die für die Umschaltung erforderlichen Hochdruckventile sehr teuer.

Aus der JP 08-090365 A ist eine Bearbeitungsvorrichtung mit mehreren Hochdruckwerkzeugen bekannt, welche an einem drehbaren Revolverkopf angeordnet sind. An dem Revolverkopf ist für jedes Hochdruckwerkzeug jeweils eine Zuleitung vorhanden, welche ständig in Verbindung mit einer Hochdruckmedium-Quelle steht. Zwischen jeder Zuleitung und dem zugeordneten Hochdruckwerkzeug ist ein Sperrventil angeordnet, das durch Wechselwirkung mit einer Kurvensteuerung geöffnet wird, wenn das betreffende Hochdruckwerkzeug in eine Arbeitsstellung bewegt wird, in welcher es das zu bearbeitende Werkstück mit Hochdruckmedium beaufschlagen soll. Hierbei ist von Nachteil, dass für jedes Hochdruckwerkzeug ein eigenes Hochdruckventil an dem Revolverkopf vorgesehen sein muss, welches überdies aufgrund des beschränkten zur Verfügung stehenden Einbauraums sehr kompakt ausgeführt sein muss. Die Herstellung solcher Hochdruckventile ist sehr aufwendig, und diese Ventile erfordern einen hohen Wartungsaufwand.

Die WO 03/047760 A offenbart eine Umschaltvorrichtung gemäß dem Oberbegriff von Anspruch 1.

Der folgenden Ereindung liegt die Aufgabe zugrunde, eine Umschaltvorrichtung für Hochdruckwerkzeuge, mittels welcher mindestens zwei Hochdruckwerkzeuge von einem Ruhezustand in einen Arbeitszustand und von dem Arbeitszustand in den Ruhezustand umschaltbar sind, zu schaffen, welche einfach aufgebaut und leicht zu warten ist.

Diese Aufgabe wird erfindungsgemäß durch eine Umschaltvorrichtung nach Anspruch 1 gelöst.

Die Umschaltung zwischen zwei Hochdruckwerkzeugen kann mit der erfindungsgemäßen Umschaltvorrichtung einfach dadurch erfolgen, dass derjenige Abführkanal, der zu dem Hochdruckwerkzeug führt, welches von dem Ruhezustand in den Arbeitszustand umgeschaltet werden soll, derart relativ zu dem Zuführkanal bewegt wird, dass er mit dem Zuführkanal in Fluidverbindung gelangt, während mindestens ein anderer Abführkanal, der zu einem Hochdruckwerkzeug führt, welches von dem Arbeitszustand in den Ruhezustand umgeschaltet werden soll, gleichzeitig so relativ zu dem Zuführkanal bewegt wird, dass die Fluidverbindung zwischen dem Zuführkanal und diesem Abführkanal getrennt wird.

Insbesondere kann vorgesehen sein, dass der Zuführkanal in der ersten Stellung der Umschaltvorrichtung unmittelbar in den ersten Abführkanal und in der zweiten Stellung unmittelbar in den zweiten Abführkanal mündet, während eine Eintrittsöffnung des zweiten Abführkanals in der ersten Stellung räumlich von der Austrittsöffnung des Zuführkanals getrennt und beispielsweise durch eine Begrenzungswand des ersten Teils der Umschaltvorrichtung verschlossen ist und eine Eintrittsöffnung des ersten Abführkanals in der zweiten Stellung räumlich von der Austrittsöffnung des Zuführkanals getrennt und beispielsweise durch eine Begrenzungswand des ersten Teils der Umschaltvorrichtung verschlossen ist.

Da der Fluss des Hochdruckmediums durch die Umschaltvorrichtung allein durch die Relativpositionen der Abführkanäle relativ zu dem Zuführkanal bestimmt wird, sind für das Umschalten der an die Umschaltvorrichtung angeschlossenen Hochdruckwerkzeuge keinerlei Hochdruckventile, insbesondere keine Ventile mit gegen einen Ventilsitz vorgespannten Ventilkörpern, erforderlich. Dadurch wird der zur Wartung der Umschaltvorrichtung erforderliche Aufwand und deren Reparaturanfälligkeit deutlich reduziert.

Insbesondere benötigt die erfindungsgemäße Umschaltvorrichtung keinerlei Ventil stromabwärts des Zuführkanals.

Ein Abführkanal steht nur dann in Fluidverbindung mit dem Zuführkanal, wenn dem diesem Abführkanal zugeordneten Hochdruckwerkzeug das Hochdruckmedium zugeführt werden soll.

Bei einer bevorzugten Ausgestaltung der erfindungsgemäßen Umschaltvorrichtung ist vorgesehen, dass der zweite Teil mindestens drei Abführkanäle umfasst, die abwechselnd mit dem Zuführkanal in Fluidverbindung bringbar sind. Auf diese Weise kann mittels der Umschaltvorrichtung zwischen mindestens drei Hochdruckwerkzeugen umgeschaltet werden.

Besonders günstig ist es, wenn der zweite Teil mindestens sechs Abführkanäle umfasst, die abwechselnd mit dem Zuführkanal in Fluidverbindung bringbar sind. Auf diese Weise können mittels der erfindungsgemäßen Umschaltvorrichtung mindestens sechs Hochdruckwerkzeuge umgeschaltet werden.

Unter einem Hochdruckwerkzeug ist dabei ein Werkzeug zu verstehen, welches ein Werkstück mit einem Hochdruckmedium beaufschlagt.

Unter einem Hochdruckmedium ist in dieser Beschreibung und in den beigefügten Ansprüchen ein fluides, d.h. flüssiges oder gasförmiges, Medium zu verstehen, welches unter einem Absolutdruck von mindestens ungefähr 30 bar steht.

Ein solches Hochdruckmedium kann beispielsweise Wasser sein.

Das Hochdruckwerkzeug kann mittels des Hochdruckmediums einen Reinigungsvorgang und/oder einen anderen Bearbeitungsvorgang, insbesondere einen Entgratungsvorgang, an dem Werkstück ausführen.

Um zu vermeiden, dass das Hochdruckmedium gleichzeitig durch mehrere Hochdruckwerkzeuge austritt, ist vorzugsweise vorgesehen, dass während der Überführung der Umschaltvorrichtung von der ersten Stellung in die zweite Stellung zumindest zeitweise keiner der Abführkanäle mit dem Zuführkanal in Fluidverbindung steht.

Bei der Erfindung ist vorgesehen, dass der zweite Teil mindestens einen Bypasskanal umfasst, der während der Überführung der Umschaltvorrichtung von der ersten Stellung in die zweite Stellung zumindest zeitweise mit dem Zuführkanal in Fluidverbindung steht. Hierdurch kann das Hochdruckmedium während des Umschaltvorgangs weiterhin kontinuierlich der Umschaltvorrichtung zugeführt und über eine Bypass-Rückleitung beispielsweise zur Hochdruckmedium-Quelle zurückgeführt werden, ohne dass es erforderlich ist, die Umschaltvorrichtung während eines Umschaltvorganges von der Hochdruckmedium-Quelle - beispielsweise durch ein Hochdruckventil - abzutrennen.

Um das Hochdruckmedium möglichst effizient zu nutzen, ist es günstig, wenn der Bypasskanal von dem Zuführkanal getrennt ist, wenn die Umschaltvorrichtung sich in der ersten Stellung oder der zweiten Stellung befindet.

Um Druckschläge in der Umschaltvorrichtung bei einem Umschaltvorgang zu vermeiden, ist es von Vorteil, wenn der Bypasskanal bei der Überführung der Umschaltvorrichtung von der ersten Stellung in die zweite Stellung mit dem Zuführkanal in Fluidverbindung kommt, bevor die Fluidverbindung des ersten Abführkanals mit dem Zuführkanal getrennt wird.

Wenn der Zuführkanal eine Auslassöffnung aufweist, an welcher der Zuführkanal an der ersten Stellung in den ersten Abführkanal mündet, und der zweite Teil der Umschaltvorrichtung eine Trennwand zwischen dem ersten Abführkanal und einem benachbarten Bypasskanal aufweist, so können Druckschläge beim Umschaltvorgang insbesondere dadurch verhindert werden, dass die Ausdehnung der Auslassöffnung des Zuführkanals längs der Bewegungsrichtung, in der der erste Teil und der zweite Teil der Umschaltvorrichtung relativ zueinander bewegbar sind, größer ist als die Ausdehnung der Trennwand längs dieser Bewegungsrichtung. Durch diese Ausgestaltung der Umschaltvorrichtung ist gewährleistet, dass der Zuführkanal über seine Auslassöffnung während des Umschaltvorgangs zu jedem Zeitpunkt in den ersten Abführkanal, in den benachbarten Bypasskanal oder sowohl in den ersten Abführkanal als auch in den benachbarten Bypasskanal mündet, so dass das Hochdruckmedium zu jedem Zeitpunkt während des Umschaltvorgangs aus dem Zuführkanal abfließen kann und keine Druckschläge auftreten. Zeitweise teilt sich der Volumenstrom des Hochdruckmediums aus dem Zuführkanal also während des Umschaltvorgangs zwischen dem ersten Abführkanal und dem benachbarten Bypasskanal auf.

Bei einer bevorzugten Ausgestaltung der Erfindung ist vorgesehen, dass mindestens ein Bypasskanal des zweiten Teils der Umschaltvorrichtung in einen Bypass-Sammelkanal mündet, der an dem ersten Teil der Umschaltvorrichtung vorgesehen ist. Ein solcher Bypass-Sammelkanal kann an eine Bypass-Rücklaufleitung angeschlossen sein, durch welche das in den Bypasskanal geleitete Hochdruckmedium zu einer Hochdruckmedium-Quelle zurückgeführt werden kann.

Bislang wurden noch keine näheren Angaben zur Art der Relativbewegung zwischen dem ersten Teil und dem zweiten Teil der Umschaltvorrichtung gemacht.

Ein besonders einfacher Aufbau der Umschaltvorrichtung ergibt sich, wenn der erste Teil und der zweite Teil der Umschaltvorrichtung relativ zueinander drehbar sind.

Dabei kann insbesondere vorgesehen sein, dass der erste Teil radial innerhalb des zweiten Teils der Umschaltvorrichtung angeordnet ist, so dass sich der zweite Teil der Umschaltvorrichtung um den ersten Teil dreht und/oder der erste Teil sich innerhalb des zweiten Teils der Umschaltvorrichtung dreht.

Bei einer bevorzugten Ausgestaltung der erfindungsgemäßen Umschaltvorrichtung ist vorgesehen, dass der Zuführkanal einen im Wesentlichen axial durch den ersten Teil der Umschaltvorrichtung verlaufenden Anfangsabschnitt umfasst, der mit einer Hochdruckmedium-Zufuhr in Fluidverbindung steht.

Ferner kann vorgesehen sein, dass der Zuführkanal einen im Wesentlichen radial durch den ersten Teil der Umschaltvorrichtung verlaufenden Endabschnitt umfasst, der in der ersten Stellung der Umschaltvorrichtung in den ersten Abführkanal mündet.

Um ein Umschalten zwischen verschiedenen Hochdruckwerkzeugen ohne einen externen Eingriff in die Umschaltvorrichtung durchführen zu können, ist es günstig, wenn die Umschaltvorrichtung eine Antriebsvorrichtung zum Antreiben einer Relativbewegung zwischen dem ersten Teil und dem zweiten Teil der Umschaltvorrichtung umfasst.

Eine solche Antriebsvorrichtung kann insbesondere eine Drehantriebsvorrichtung umfassen.

Der erste Teil der Umschaltvorrichtung kann ortsfest, beispielsweise an einem Maschinenbett, einem Gehäuse der Hochdruckanlage oder an einer anderen Haltefläche, angeordnet sein, während der zweite Teil der Umschaltvorrichtung relativ zu dem ersten Teil beweglich ist.

Alternativ hierzu kann auch vorgesehen sein, dass der zweite Teil der Umschaltvorrichtung ortsfest, beispielsweise an einem Maschinenbett, einem Gehäuse der Hochdruckanlage oder an einer anderen Haltefläche, angeordnet ist, während der erste Teil der Umschaltvorrichtung relativ zu dem ersten Teil beweglich ist.

Die Hochdruckanlage kann besonders kompakt ausgeführt werden, wenn mindestens ein Hochdruckwerkzeug direkt an dem zweiten Teil der Umschaltvorrichtung angeordnet ist.

Besonders günstig ist es, wenn an dem zweiten Teil der Umschaltvorrichtung mindestens zwei Hochdruckwerkzeuge angeordnet sind.

Wenn der zweite Teil der Umschaltvorrichtung beweglich ist, so können die an dem zweiten Teil der Umschaltvorrichtung angeordneten Hochdruckwerkzeuge zusammen mit der Bewegung des zweiten Teils der Umschaltvorrichtung in ihre jeweilige Arbeitsstellung bewegt werden.

Um den aus einem Hochdruckwerkzeug austretenden Strahl des Hochdruckmediums in einfacher Weise relativ zu dem zu reinigenden oder zu bearbeitenden Werkstück bewegen zu können, ist es günstig, wenn mindestens ein Hochdruckwerkzeug um eine Rotationsachse drehbar an dem zweiten Teil der Umschaltvorrichtung angeordnet ist.

Um die Rotation des Strahls des Hochdruckmediums genau steuern zu können, ist es von Vorteil, wenn die Umschaltvorrichtung eine Rotationsantriebsvorrichtung zum Antreiben einer Rotation mindestens eines drehbar an dem zweiten Teil angeordneten Hochdruckwerkzeugs um dessen Rotationsachse umfasst.

Durch die Rotation des Strahls des Hochdruckmediums relativ zum zu bearbeitenden Werkstück können insbesondere das betreffende Hochdruckwerkzeug umgebende Bereiche des zu bearbeitenden Werkstücks, beispielsweise die Begrenzungswände eines Hohlraums in dem Werkstück, in welchen das Hochdruckwerkzeug eintaucht, gereinigt oder in anderer Weise bearbeitet werden.

Wenn an dem zweiten Teil der Umschaltvorrichtung mehrere Hochdruckwerkzeuge angeordnet sind, die abwechselnd in eine Arbeitsstellung bringbar sind, in welcher das in Arbeitsstellung befindliche Hochdruckwerkzeug mit dem Zuführkanal in Fluidverbindung steht, so ist es günstig, wenn die Rotationsantriebsvorrichtung mit dem jeweils in Arbeitsstellung befindlichen Hochdruckwerkzeug zum Antreiben einer Rotationsbewegung dieses Hochdruckwerkzeugs um dessen Rotationsachse koppelbar ist.

Auf diese Weise könne mittels einer einzigen, stationär an der Umschaltvorrichtung angeordneten Rotationsantriebsvorrichtung alle drehbar an dem zweiten Teil der Umschaltvorrichtung gelagerten Hochdruckwerkzeuge in eine Rotationsbewegung versetzt werden, so dass es nicht erforderlich ist, alle diese Hochdruckwerkzeuge mit einer eigenen Rotationsantriebsvorrichtung zu versehen.

Statt die Hochdruckwerkzeuge direkt an dem zweiten Teil der Umschaltvorrichtung anzuordnen, kann auch vorgesehen sein, dass an dem zweiten Teil der Umschaltvorrichtung mindestens eine Anschlussleitung eines Hochdruckwerkzeugs angeschlossen ist, über welche das Hochdruckmedium aus einem Abführkanal des zweiten Teils der Umschaltvorrichtung dem betreffenden Hochdruckwerkzeug zuführbar ist.

Insbesondere kann vorgesehen sein, dass an dem zweiten Teil der Umschaltvorrichtung mindestens zwei Anschlussleitungen von Hochdruckwerkzeugen angeschlossen sind.

Ein besonders einfacher Aufbau der erfindungsgemäßen Umschaltvorrichtung ergibt sich, wenn die Umschaltvorrichtung kein Ventil zum Absperren der Abführkanäle aufweist.

Die erfindungsgemäße Umschaltvorrichtung eignet sich insbesondere zur Verwendung in einer Hochdruckanlage zur Reinigung und/oder zur Bearbeitung von Werkstücken mittels eines Hochdruckmediums.

Der vorliegenden Erfindung liegt die weitere Aufgabe zugrunde, ein Verfahren zum Umschalten von mindestens zwei Hochdruckwerkzeugen von einem Ruhezustand in einen Arbeitszustand und von dem Arbeitszustand in den Ruhezustand zu schaffen, welches einfach, zuverlässig und ohne großen Wartungsaufwand durchführbar ist.

Diese Aufgabe wird erfindungsgemäß durch ein Verfahren nach Anspruch 15 gelöst.

Die Vorteile des erfindungsgemäßen Verfahrens wurden bereits vorstehend im Zusammenhang mit der Beschreibung der erfindungsgemäßen Umschaltvorrichtung erläutert.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Darstellung einer Hochdruckanlage zur Reinigung und/oder zur Bearbeitung von Werkstücken mittels eines Hochdruckmediums, welche einen Roboter zur Handhabung eines Werkstücks und eine Umschaltvorrichtung für Hochdruckwerkzeuge umfasst;
- Fig. 2: einen schematischen Längsschnitt durch eine Umschaltvorrichtung für Hochdruckwerkzeuge, welche einen ersten Teil mit einem Zuführkanal für das Hochdruckmedium und einen um den ersten Teil drehbaren zweiten Teil mit mehreren Abführkanälen für das Hochdruckmedium und diesen Abführkanälen zugeordnete Hochdruckwerkzeuge umfasst;
- Fig. 3: einen schematischen Querschnitt durch die Umschaltvorrichtung aus Fig. 2 längs der Linie 3-3 in Fig. 2, in einer ersten Stellung, in welcher einer der Abführkanäle mit dem Zuführkanal in Fluidverbindung steht und alle anderen Abführkanäle sowie an dem zweiten Teil der Umschaltvorrichtung ausgebildete Bypasskanäle von dem Zuführkanal getrennt sind;
- Fig. 4: einen der Fig. 3 entsprechenden schematischen Querschnitt durch die Umschaltvorrichtung aus Fig. 2 in einer Zwischenstellung der Umschaltvorrichtung, in welcher alle Abführkanäle von dem Zuführkanal getrennt sind und ein Bypasskanal in Fluidverbindung mit dem Zuführkanal steht;
- Fig. 5: einen ausschnittsweisen Querschnitt durch die Umschaltvorrichtung aus Fig. 4 längs der Linie 5-5 in Fig. 4;

- Fig. 6: einen schematischen Längsschnitt durch eine zweite Ausführungsform einer Umschaltvorrichtung, welche mit einer stationären Rotationsantriebsvorrichtung zum Antreiben einer Rotation des jeweils in Arbeitsstellung befindlichen Hochdruckwerkzeugs um dessen Längsachse versehen ist; und
- Fig. 7: einen schematischen Längsschnitt durch eine dritte Ausführungsform einer Umschaltvorrichtung, bei welcher der erste Teil mit dem Zuführkanal innerhalb des zweiten Teils mit den mehreren Abführkanälen drehbar ist und die Abführkanäle des zweiten Teils mit jeweils mindestens einem stationären Hochdruckwerkzeug verbunden sind.

Gleiche oder äquivalente Elemente sind in allen Figuren mit denselben Bezugszeichen bezeichnet.

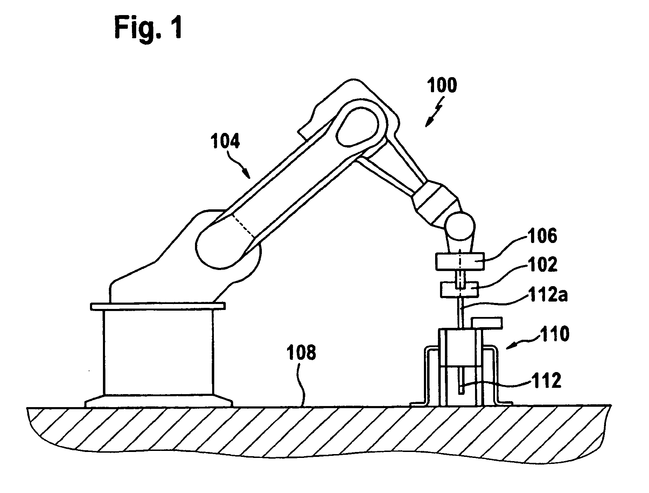

Eine in Fig. 1 als Ganzes dargestellte und mit 100 bezeichnete Hochdruckanlage zum Reinigen und/oder zum Bearbeiten von Werkstücken 102 umfasst einen Roboter 104 zum Handhaben jeweils eines durch einen Greifer 106 des Roboters gehaltenen Werkstücks 102 und eine auf demselben Maschinenbett 108 wie der Roboter 104 angeordnete Umschaltvorrichtung 110 für mehrere, beispielsweise sechs, an der Umschaltvorrichtung 110 gehaltene Hochdruckwerkzeuge 112, mittels welcher jeweils eines der Hochdruckwerkzeuge 112 in eine Arbeitsstellung bewegbar ist, in der das betreffende Hochdruckwerkzeug 112 auf das zu reinigende und/oder zu bearbeitende Werkstück 102 gerichtet ist und mit einem Hochdruckmedium beaufschlagbar ist.

Unter einem Hochdruckmedium ist dabei ein fluides, d.h. flüssiges oder gasförmiges, Medium zu verstehen, welches unter einem Absolutdruck von mindestens ungefähr 30 bar steht.

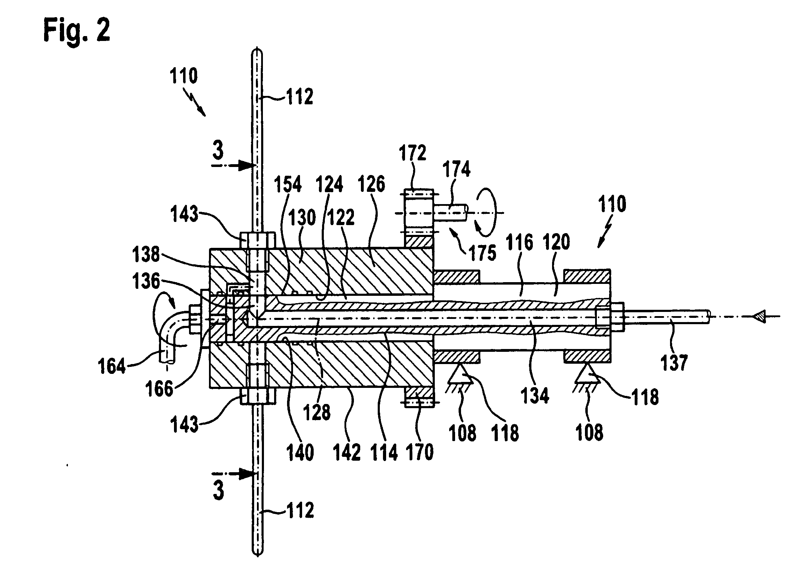

Der Aufbau der Umschaltvorrichtung 110 im einzelnen ist den Fig. 2 bis 5 zu entnehmen.

Die Umschaltvorrichtung 110 umfasst einen ersten Teil 114 in Form einer zylindrischen Welle 116, die mittels nur schematisch dargestellter Lager 118 drehfest und axial unverschieblich an dem Maschinenbett 108 gelagert ist.

Die Welle 116 weist einen hinteren Abschnitt 120 mit einem größeren Außendurchmesser und einen vorderen Abschnitt 122 mit einem kleineren Außendurchmesser auf.

Dieser vordere Abschnitt 122 taucht in eine mittige axiale Bohrung 124 eines zweiten Teils 126 der Umschaltvorrichtung 110 ein, welcher als ein relativ zu dem ersten Teil 114 um die gemeinsame Längsachse 128 drehbarer Revolverkopf 130 ausgebildet ist.

Der erste Teil 114 der Umschaltvorrichtung 110 ist mit einem Zuführkanal 132 für das Hochdruckmedium versehen, welcher einen koaxial zur Längsachse 128 des ersten Teils 114 verlaufenden Anfangsabschnitt 134 und einen vom Ende des Anfangsabschnitts 134 aus in radialer Richtung bis zur äußeren Umfangsfläche 154 des ersten Teils 114 verlaufenden Endabschnitt 136 aufweist. Der Anfangsabschnitt 134 des Zuführkanals 132 ist über eine Hochdruckmedium-Zuführleitung 137 mit einer (nicht dargestellten) Hochdruckmedium-Quelle (beispielsweise einer Hochdruckpumpe) verbunden.

Der zweite Teil 126 der Umschaltvorrichtung 110 ist mit mehreren, beispielsweise sechs, ebenfalls radial zur gemeinsamen Längsachse 128 des ersten Teils 114 und des zweiten Teils 126 verlaufenden Abführkanälen 138 für das Hochdruckmedium versehen, von denen jeder von einer inneren Mantelfläche 140 des zweiten Teils 126 bis zu dessen äußerer Mantelfläche 142 führt.

In den Mündungsbereich jedes Abführkanals 138 an der äußeren Mantelfläche 142 des zweiten Teils 126 ist jeweils ein Anschlussstück 143 eines Hochdruckwerkzeugs 112 einschraubbar, so dass das betreffende Hochdruckwerkzeug 112 ohne zwischengeschaltetes Ventil direkt mit dem jeweiligen Abführkanal 138 in ständiger Fluidverbindung steht.

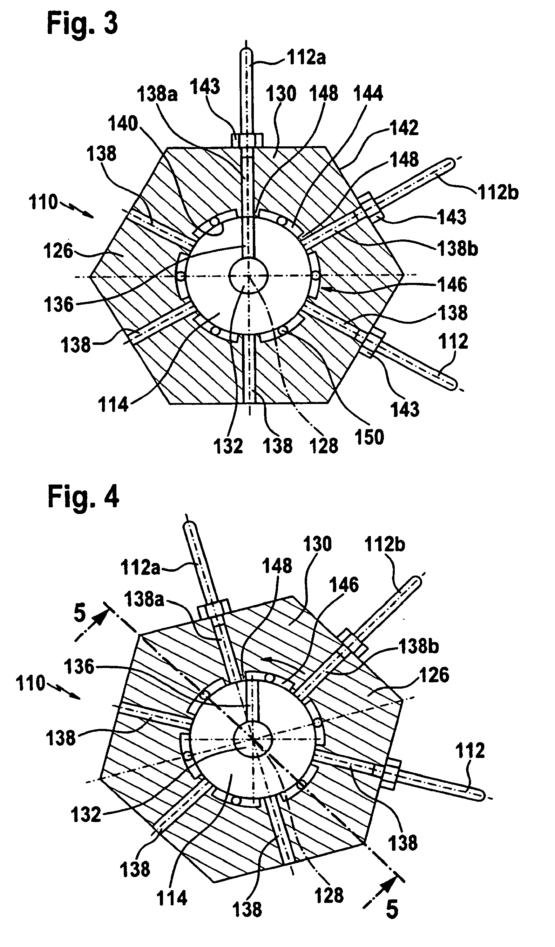

Wie aus Fig. 3 zu ersehen ist, sind die Abführkanäle 138 in regelmäßigen Winkelabständen (von beispielsweise jeweils 60° im Falle von sechs Abführkanälen 138) um die Längsachse 128 des zweiten Teils 126 verteilt.

Zwischen jeweils zwei einander benachbarten Abführkanälen 138 erstreckt sich jeweils ein kreisbogenabschnittsförmiger Anfangsabschnitt 144 eines als Ganzes mit 146 bezeichneten Bypasskanals, der an der inneren Mantelfläche 140 des zweiten Teils 126 der Umschaltvorrichtung 110 mündet und durch schmale Trennwände 148 von den sich in der Umfangsrichtung der inneren Mantelfläche 140 des zweiten Teils 126 der Umschaltvorrichtung 110 jeweils anschließenden Abführkanälen 138 getrennt ist.

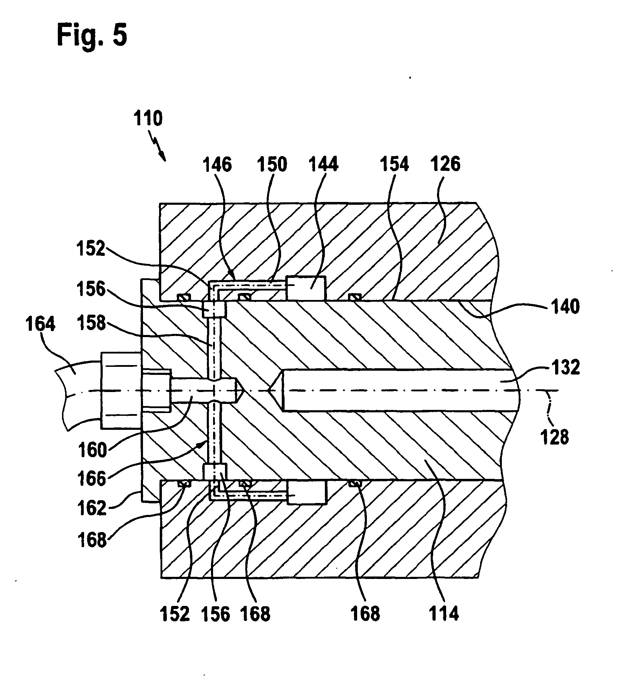

Wie am besten aus Fig. 5 zu ersehen ist, umfasst jeder Bypasskanal 146 ferner einen sich von dem Anfangsabschnitt 144 in axialer Richtung erstreckenden Zwischenabschnitt 150 und einen sich von dem dem Anfangsabschnitt 144 des Bypasskanals 146 abgewandten Ende des Zwischenabschnitts 150 aus radial einwärts erstreckenden und wiederum an der inneren Mantelfläche 140 des zweiten Teils 126 der Umschaltvorrichtung 110 mündenden Endabschnitt 152.

Den Mündungsöffnungen dieser Endabschnitte 152 der Bypasskanäle 146 gegenüberliegend ist an der äußeren Mantelfläche 154 des ersten Teils 114 der Umschaltvorrichtung 110 eine umlaufende Ringnut 156 ausgebildet, von deren Nutgrund mehrere radiale Kanäle 158 zu einem wiederum in axialer Richtung des ersten Teils 114 verlaufenden zentralen Kanal 160 führen.

Der zentrale Kanal 160 mündet an der der Hochdruckmedium-Zuführleitung 137 abgewandten Stirnseite 162 des ersten Teils 114 der Umschaltvorrichtung 110 und ist dort an eine Bypass-Rücklaufleitung 164 angeschlossen, welche zu der (nicht dargestellten) Hochdruckmedium-Quelle der Hochdruckanlage 100 zurückführt.

Der zentrale Kanal 160, die radialen Kanäle 158 und die Ringnut 156 des ersten Teils 114 der Umschaltvorrichtung 110 bilden zusammen einen Bypass-Sammelkanal 166 des ersten Teils 114.

Wie aus den Fig. 5 und 2 zu ersehen ist, sind in der Richtung der Längsachse 128 voneinander beabstandete Dichtungen 168, beispielsweise in Form von elastomeren O-Ring-Dichtungen, vorgesehen, um den kleinen Dichtspalt zwischen der äußeren Mantelfläche 154 des ersten Teils 114 und der inneren Mantelfläche 140 des zweiten Teils 126 der Umschaltvorrichtung 110 abzudichten und so zu verhindern, dass Hochdruckmedium in der Axialrichtung aus den Abführkanälen 138 oder den Bypasskanälen 146 der Umschaltvorrichtung 110 entweicht.

Wie aus Fig. 2 zu ersehen ist, ist der zweite Teil 126 der Umschaltvorrichtung 110 ferner an seinem hinteren Ende mit einem Antriebsritzel 170 versehen, in welches ein Abtriebsritzel 172 eines (nur mit seiner Abtriebswelle dargestellten) Drehantriebsmotors 174 eingreift, so dass mittels des Drehantriebsmotors 174 der zweite Teil 126 der Umschaltvorrichtung 110 um die Längsachse 128 relativ zu dem ersten Teil 114 der Umschaltvorrichtung 110 gedreht werden kann. Der Drehantriebsmotor 174, das Abtriebsritzel 172 und das Antriebsritzel 170 bilden zusammen eine Drehantriebsvorrichtung 175 zum Drehen des zweiten Teils 126 der Umschaltvorrichtung 110.

Um das Antriebsritzel 170 abstützen zu können, ist der hintere Abschnitt des zweiten Teils 126 der Umschaltvorrichtung 110 vorzugsweise im Querschnitt kreisrund ausgebildet, während der die Hochdruckwerkzeuge 112 tragende vordere Abschnitt des zweiten Teils 126 der Umschaltvorrichtung 110 vorzugsweise einen polygonalen Querschnitt aufweist, dessen Kantenanzahl der Anzahl der vorhandenen Abführkanäle 138 entspricht. Bei dem in Fig. 3 dargestellten Ausführungsbeispiel weist der vordere Abschnitt des zweiten Teils 126 der Umschaltvorrichtung 110 demnach einen Querschnitt in Form eines regelmäßigen Sechsecks auf.

Mittels des Drehantriebsmotors 174 ist der zweite Teil 126 der Umschaltvorrichtung 110 von der in Fig. 3 dargestellten ersten Stellung, in welcher ein erster Abführkanal 138a mit dem Endabschnitt 136 des Zuführkanals 132 des ersten Teils 114 fluchtet und somit mit dem Zuführkanal 132 in Fluidverbindung steht, während ein zweiter Abführkanal 138b und alle weiteren Abführkanäle 138 von dem Zuführkanal 132 getrennt sind, in eine (nicht dargestellte) zweite Stellung überführbar, in welcher der zweite Abführkanal 138b mit dem (drehfest angeordneten und daher stets in dieselbe Richtung, beispielsweise nach oben, weisenden) Endabschnitt 136 des Zuführkanals 132 fluchtet und somit mit dem Zuführkanal 132 in Fluidverbindung steht, während alle anderen Abführkanäle, einschließlich des ersten Abführkanals 138a, in dieser zweiten Stellung von dem Zuführkanal 132 getrennt sind.

In dem in Fig. 3 dargestellten Ausführungsbeispiel wird der zweite Teil 126 der Umschaltvorrichtung 110 also zur Überführung der Umschaltvorrichtung 110 von der ersten Stellung in die zweite Stellung um einen Winkel von 60° um die Längsachse 128 gedreht.

Bei der Überführung der Umschaltvorrichtung 110 von der in Fig. 3 dargestellten ersten Stellung in die zweite Stellung, in welcher der zweite Abführkanal 138b mit dem Endabschnitt 136 des Zuführkanals 132 fluchtet, wird zunächst eine Fluidverbindung zwischen dem Zuführkanal 132 und dem zwischen den Abführkanälen 138a und 138b angeordneten Bypasskanal 146 hergestellt, bevor die Fluidverbindung zwischen dem Zuführkanal 132 und dem ersten Abführkanal 138a vollständig getrennt wird. Dies wird dadurch ermöglicht, dass die Trennwand 148 zwischen dem ersten Abführkanal 138a und dem Anfangsabschnitt 144 des Bypasskanals 146 in der Umfangsrichtung des zweiten Teils 126 der Umschaltvorrichtung 110 eine kleinere Ausdehnung aufweist als der Endabschnitt 136 des Zuführkanals 132.

Hierdurch teilt sich der Volumenstrom des Hochdruckmediums beim Übergang von der ersten Stellung zur zweiten Stellung der Umschaltvorrichtung 110 zunächst zwischen dem ersten Abführkanal 138a und dem Bypasskanal 146 auf, so dass keine Druckschläge auftreten können (siehe die in Fig. 4 dargestellte Zwischenstellung der Umschaltvorrichtung 110).

Beim Weiterdrehen des zweiten Teils 126 relativ zum ersten Teil 114 der Umschaltvorrichtung 110 steht der Zuführkanal 132 ausschließlich in Fluidverbindung mit dem Bypasskanal 146, so dass das von der Hochdruckmedium-Quelle zugeführte Hochdruckmedium durch den betreffenden Bypasskanal 146, den Bypass-Sammelkanal 166 und die Bypass-Rücklaufleitüng 164 abfließen und zur Hochdruckmedium-Quelle zurückgeführt werden kann.

### Die vorstehend beschriebene Hochdruckanlage 100 funktioniert wie folgt:

Ein zu reinigendes und/oder zu bearbeitendes Werkstück 102 wird von dem Roboter 104 mittels dessen Greifers 106 ergriffen, in eine Bearbeitungsstellung oberhalb der Umschaltvorrichtung 110 bewegt und in dieser Bearbeitungsstellung gehalten.

Der zweite Teil 126 der Umschaltvorrichtung 110 wird mittels der Drehantriebsvorrichtung 175 so lange gedreht, bis das zuerst zu benutzende Hochdruckwerkzeug 112a in der oberen Arbeitsstellung steht, in welcher der diesem Hochdruckwerkzeug 112a zugeordnete Abführkanal 138a mit dem Endabschnitt 136 des Zuführkanals 132 fluchtet.

Das Hochdruckmedium strömt nun durch das in Arbeitsstellung befindliche Hochdruckwerkzeug 112a aus und beaufschlagt das zu bearbeitende Werkstück 102. Alle anderen Hochdruckwerkzeuge 112 sind vom Zuführkanal 132 und damit von der Hochdruckmedium-Zufuhr getrennt.

Nach einer vorgegebenen Bearbeitungszeit durch das erste Hochdruckwerkzeug 112a wird ein für einen zweiten Bearbeitungsschritt benötigtes zweites Hochdruckwerkzeug 112b in die Arbeitsstellung bewegt, indem der zweite Teil 126 der Umschaltvorrichtung 110 mittels der Drehantriebsvorrichtung 175 so lange relativ zu dem ersten Teil 114 der Umschaltvorrichtung 110 verdreht wird, bis der Abführkanal 138b des zweiten Hochdruckwerkzeugs 112b mit dem Endabschnitt 136 des Zuführkanals 132 fluchtet. Während des Überführens der Umschaltvorrichtung 110 von der ersten Stellung in die zweite Stellung sind alle Abführkanäle 138 der Hochdruckwerkzeuge 112 von dem Zuführkanal 132 getrennt, ohne dass es hierfür einer Ventilsteuerung bedarf.

Das Hochdruckmedium wird in dieser Übergangsphase über den Bypasskanal 146, den Bypass-Sammelkanal 166 und die Bypass-Rücklaufleitung 164 aus der Umschaltvorrichtung 110 abgeführt, so dass kein Bypassventil in der Zuführleitung zwischen der Hochdruckmedium-Quelle und der Umschaltvorrichtung 110 erforderlich ist und die Umschaltvorrichtung 110 während des Umschaltvorganges kontinuierlich von dem Hochdruckmedium durchströmt werden kann.

Nach Ende der vorgegebenen Bearbeitungszeit mit dem zweiten Hochdruckwerkzeug 112b können sich gegebenenfalls weitere Bearbeitungsschritte mit anderen Hochdruckwerkzeugen 112 der Umschaltvorrichtung 110 anschließen.

Nach Bearbeitung eines Bereichs des Werkstücks 102 (beispielsweise einer Bohrung desselben) kann der Roboter 104 das Werkstück 102 so bewegen, dass ein anderer Bereich des Werkstücks 102 (beispielsweise eine andere Bohrung) in einer Bearbeitungsposition relativ zu einem in Arbeitsstellung befindlichen Hochdruckwerkzeug 112 steht.

Nach Abschluss aller Bearbeitungsschritte an allen zu bearbeitenden Bereichen des Werkstücks 102 wird das Werkstück 102 vom Roboter 104 in eine Abgabeposition bewegt, von wo aus das Werkstück 102 mittels einer geeigneten Handhabungs- oder Fördereinrichtung weiter transportiert wird.

Der Roboter 104 und die Umschaltvorrichtung 110 der Hochdruckanlage 100 werden dabei von einer (nicht dargestellten) Steuervorrichtung, die vorzugsweise frei programmierbar ist, automatisch gesteuert.

Dadurch, dass sich das Werkstück 102 während aufeinanderfolgender Bearbeitungsschritte mit verschiedenen Hochdruckwerkzeugen 112 in derselben Bearbeitungsstellung befinden kann, muss der Roboter 104 nur sehr kurze Wege fahren, wodurch eine Zeitersparnis und eine bessere Ausnutzung der Behandlungszeit erzielt wird.

Ferner kann die Hochdruckanlage 100 in einer kompakten Arbeitskammer angeordnet werden, da die an dem zweiten Teil 126 der Umschaltvorrichtung 110 angeordneten Hochdruckwerkzeuge 112 nur wenig Bauraum beanspruchen.

Ferner muss das Hochdruckmedium, wenn ein neues Hochdruckwerkzeug 112 in der Arbeitsstellung angekommen ist, nur einen sehr kurzen Weg von der Eintrittsöffnung des zugehörigen Abführkanals 138 bis zur Austrittsöffnung des Hochdruckwerkzeugs 112 zurücklegen, so dass nach dem Umschaltvorgang der Umschaltvorrichtung 110 nur eine sehr kurze Wartezeit verstreicht, bis die Bearbeitung des Werkstücks 102 mit dem Hochdruckmedium beginnen oder fortgesetzt werden kann.

Die erfindungsgemäße Hochdruckanlage benötigt keine teuren HochdruckVentile, um die verschiedenen Hochdruckwerkzeuge 112 nacheinander von einem Ruhezustand in einen Arbeitszustand und von dem Arbeitszustand wieder in den Ruhezustand umzuschalten. Ferner kann die für den Anschluss der Hochdruckwerkzeuge 112 an die Hochdruckmedium-Quelle erforderliche Verrohrung deutlich reduziert werden, da lediglich eine Zuführleitung von der Hochdruckmedium-Quelle bis zur Eingangsöffnung des Zuführkanals 132 benötigt wird.

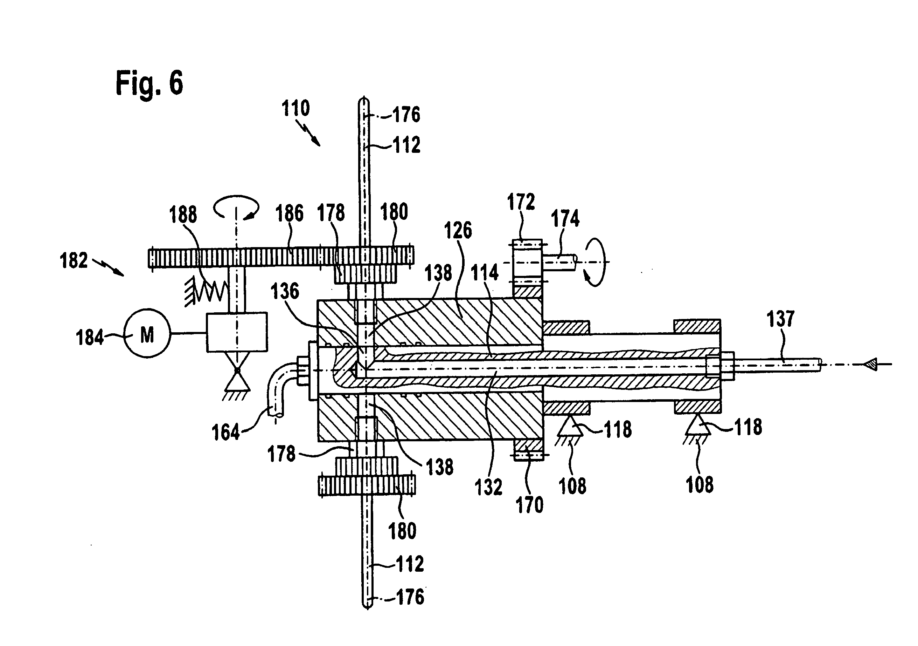

Eine in Fig. 6 dargestellte zweite Ausführungsform einer Umschaltvorrichtung 110 unterscheidet sich von der in den Fig. 2 bis 5 dargestellten ersten Ausführungsform dadurch, dass die Hochdruckwerkzeuge 112 nicht starr an dem zweiten Teil 126 der Umschaltvorrichtung 110 festgelegt sind, sondern um eine mit ihrer Längsachse übereinstimmende Rotationsachse 176 drehbar an dem zweiten Teil 126 gehalten sind.

Um die Zufuhr von Hochdruckmedium aus dem jeweils zugeordneten Abführkanal 138 in das relativ zum Abführkanal 138 drehbare Hochdruckwerkzeug 112 zuführen zu können, ist jedes drehbare Hochdruckwerkzeug 112 mit einer Drehdurchführung 178 für das Hochdruckmedium versehen.

Ferner weist jedes drehbare Hochdruckwerkzeug 112 ein Reibrad 180 auf.

Außerdem umfasst die Umschaltvorrichtung 110 bei dieser Ausführungsform eine Rotationsantriebsvorrichtung 182, die ihrerseits einen Rotationsantriebsmotor 184 und ein von diesem angetriebenes Reibrad 186 umfasst, welches durch ein Federelement 188 gegen das Reibrad 180 des jeweils in Arbeitsstellung befindlichen Hochdruckwerkzeugs 112 vorgespannt ist.

Durch Reibschluss zwischen dem Reibrad 186 der Rotationsantriebsvorrichtung 182 und dem Reibrad 180 des in Arbeitsstellung befindlichen Hochdruckwerkzeugs 112 wird bei in Betrieb befindlichem Rotationsantriebsmotor 184 das Reibrad 180 und damit das drehfest mit dem Reibrad 180 verbundene Hochdruckwerkzeug 112 um die Rotationsachse 176 gedreht.

Wenn das Hochdruckwerkzeug 112 eine Austrittsöffnung aufweist, welche gegenüber einer zur Rotationsachse 176 senkrechten Ebene geneigt ist, ist es auf diese Art möglich, den aus dem Hochdruckwerkzeug 112 austretenden Strahl des Hochdruckmediums um die Rotationsachse 176 rotieren zu lassen, so dass das betreffende Hochdruckwerkzeug 112 umgebende Bereiche eines zu bearbeitenden Werkstücks 102, beispielsweise die Begrenzungswände eines Hohlraums in dem Werkstück 102, in welchen das Hochdruckwerkzeug 112 eintaucht, gereinigt oder in anderer Weise bearbeitet werden können.

Beim Umschalten der Umschaltvorrichtung 110 zu einem anderen Hochdruckwerkzeug 112 wird die reibschlüssige Verbindung zwischen dem antriebsseitigen Reibrad 186 und dem werkzeugseitigen Reibrad 180 gelöst und anschließend eine reibschlüssige Verbindung zwischen dem antriebsseitigen Reibrad 186 und dem werkzeugseitigen Reibrad 180 des nächsten in die Arbeitsstellung gelangenden Hochdruckwerkzeugs 112 hergestellt, so dass auch dieses nächste Hochdruckwerkzeug 112 um die Rotationsachse 176 gedreht werden kann.

Auf diese Weise können mittels einer einzigen, stationär an der Umschaltvorrichtung 110 angeordneten Rotationsantriebsvorrichtung 182 alle drehbar an dem zweiten Teil 126 gelagerten Hochdruckwerkzeuge 112 in eine Rotationsbewegung versetzt werden.

Alternativ zu einem Reibradantrieb der Rotationsbewegung der Hochdruckwerkzeuge 112 kommen auch andere Antriebsmechanismen in Betracht, beispielsweise ein Zahnradantrieb, ein Schneckenantrieb oder ähnliches.

Im übrigen stimmt die in Fig. 6 dargestellte zweite Ausführungsform einer Umschaltvorrichtung 110 mit der in den Fig. 2 bis 5 dargestellten ersten Ausführungsform überein, auf deren vorstehende Beschreibung insoweit Bezug genommen wird.

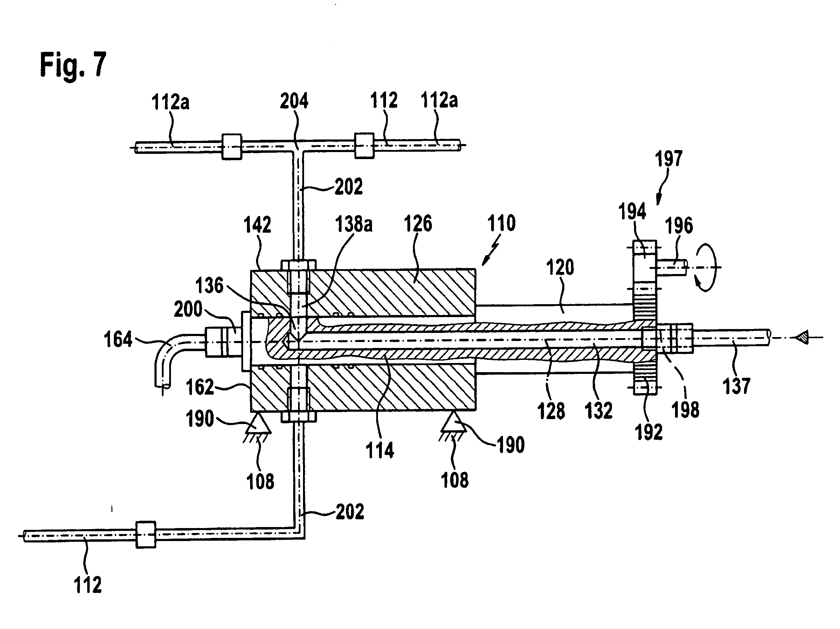

Eine in Fig. 7 dargestellte dritte Ausführungsform einer Umschaltvorrichtung 110 unterscheidet sich von der in den Fig. 2 bis 5 dargestellten ersten Ausführungsform dadurch, dass nicht der erste Teil 114 der Umschaltvorrichtung 110, sondern stattdessen der zweite Teil 126 mittels Lagern 190 drehfest an dem Maschinenbett 108 gelagert ist, während der erste Teil 114 mit dem Zuführkanal 132 um die Längsachse 128 relativ zum zweiten Teil 126 drehbar ist.

Um diese Drehbewegung antreiben zu können, ist der hintere Abschnitt 120 des ersten Teils 114 der Umschaltvorrichtung 110 bei dieser Ausführungsform mit einem Antriebsritzel 192 versehen, in welches ein Abtriebsritzel 194 eines (nur mit seiner Abtriebswelle dargestellten) Drehantriebsmotors 196 eingreift. Der Drehantriebsmotor 196, das Abtriebsritzel 194 und das Antriebsritzel 192 bilden zusammen eine Drehantriebsvorrichtung 197 zum Drehen des ersten Teils 114 der Umschaltvorrichtung 110.

Um eine Fluidverbindung des Zuführkanals 132 des nunmehr drehbaren ersten Teils 114 mit der Hochdruckmedium-Zuführleitung 137 zu ermöglichen, ist am Eingang des Zuführkanals 132 eine Drehdurchführung 198 vorgesehen.

Ebenso ist an der Stirnseite 162 des nunmehr drehbaren ersten Teils 114 eine Drehdurchführung 200 vorgesehen, um eine Fluidverbindung zwischen dem Bypass-Sammelkanal 166 einerseits und der Bypass-Rücklaufleitung 164 andererseits herzustellen.

Die Hochdruckwerkzeuge 112 sind bei dieser Ausführungsform nicht direkt an der äußeren Mantelfläche 142 des zweiten Teils 126 der Umschaltvorrichtung 110 angeordnet, sondern stationär an in der Arbeitskammer der Hochdruckanlage 100 verteilten Stellen, und über jeweils eine Verteilerleitung 202 mit jeweils einem der Abführkanäle 138 in dem zweiten Teil 126 der Umschaltvorrichtung 110 verbunden.

Wie aus Fig. 7 zu ersehen ist, können diese Verteilerleitungen 202 auch Verzweigungen 204 aufweisen, so dass mehrere Hochdruckwerkzeuge 112 an denselben Abführkanal 138 des zweiten Teils 126 der Umschaltvorrichtung 110 angeschlossen sein können.

Mittels dieser Ausführungsform der Umschaltvorrichtung 110 können die an die Abführkanäle 138 angeschlossenen Hochdruckwerkzeuge 112 nacheinander von einem Ruhezustand in einen Arbeitszustand umgeschaltet werden, indem der erste Teil 114 der Umschaltvorrichtung 110 mittels der Drehantriebsvorrichtung 197 so verdreht wird, dass der einem Hochdruckwerkzeug 112 oder einer Gruppe von Hochdruckwerkzeugen 112 zugeordnete Abführkanal 138 mit dem (bei dieser Ausführungsform drehbeweglichen) Endabschnitt 136 des Zuführkanals 132 der Umschaltvorrichtung 110 fluchtet.

So fluchtet in der in Fig. 7 dargestellten ersten Stellung der Umschaltvorrichtung 110 der Endabschnitt 136 des Zuführkanals 132 mit dem obersten Abführkanal 138a, so dass sich die an diesen Abführkanal 138a angeschlossenen Hochdruckwerkzeuge 112a im Arbeitszustand befinden, während alle anderen Hochdruckwerkzeuge 112 von dem Zuführkanal 132 und somit von der Zufuhr von Hochdruckmedium getrennt sind.

Um ein Werkstück 102 durch ein anderes Hochdruckwerkzeug 112 oder eine andere Gruppe von Hochdruckwerkzeugen 112 mit Hochdruckmedium zu beaufschlagen, wird das Werkstück 102 mittels des Roboters 104 in eine Bearbeitungsposition vor dem anderen Hochdruckwerkzeug 112 bewegt und der erste Teil 114 der Umschaltvorrichtung 110 so lange gedreht, bis der jeweils zugehörige andere Abführkanal 138 mit dem Endabschnitt 136 des Zuführkanals 132 fluchtet.

Während der Überführung der Umschaltvorrichtung 110 von der ersten Stellung in eine solche zweite Stellung sind alle Abführkanäle 138 vom Zuführkanal 132 getrennt, und das kontinuierlich dem Zuführkanal 132 zugeführte Hochdruckmedium wird durch jeweils einen Bypasskanal 146, den Bypass-Sammelkanal 166 und die Bypass-Rücklaufleitung 164 aus der Umschaltvorrichtung 110 abgeführt, so dass Druckschläge beim Umschaltvorgang vermieden werden.

Im Übrigen stimmt die in Fig. 7 dargestellte dritte Ausführungsform einer Umschaltvorrichtung 110 mit der in den Fig. 2 bis 5 dargestellten ersten Ausführungsform überein, auf deren vorstehende Beschreibung insoweit Bezug genommen wird.

## Patentansprüche

1. Umschaltvorrichtung für Hochdruckwerkzeuge, mittels welcher mindestens zwei Hochdruckwerkzeuge (112) von einem Ruhezustand in einen Arbeitszustand und von dem Arbeitszustand in den Ruhezustand umschaltbar sind,
wobei die Umschaltvorrichtung (110) einen ersten Teil (114) mit einem Zuführkanal (132) für ein Hochdruckmedium und einen zweiten Teil (126) mit mindestens zwei Abführkanälen (138) für das Hochdruckmedium umfasst und
wobei der erste Teil (114) und der zweite Teil (126) so relativ zueinander bewegbar sind, dass die Umschaltvorrichtung (110) von einer ersten Stellung, in welcher ein erster Abführkanal (138a) mit dem Zuführkanal (132) und mit einem ersten Hochdruckwerkzeug (112a) in Fluidverbindung steht und ein zweiter Abführkanal (138b) mit einem zweiten Hochdruckwerkzeug (112b) in Fluidverbindung steht, aber von dem Zuführkanal (132) getrennt ist, in eine zweite Stellung überführbar ist, in welcher der erste Abführkanal (138a) von dem Zuführkanal (132) getrennt ist und der zweite Abführkanal (138b) mit dem Zuführkanal (132) in Fluidverbindung steht,
**dadurch gekennzeichnet,**
**dass** der zweite Teil (126) mindestens einen Bypasskanal (146) umfasst, der während der Überführung der Umschaltvorrichtung (110) von der ersten Stellung in die zweite Stellung zumindest zeitweise mit dem Zuführkanal (132) in Fluidverbindung steht.

2. Umschaltvorrichtung nach Anspruch 1, **dadurch gekennzeichnet, dass** der Bypasskanal (146) von dem Zuführkanal (132) getrennt ist, wenn die Umschaltvorrichtung (110) sich in der ersten Stellung oder der zweiten Stellung befindet.

3. Umschaltvorrichtung nach einem der Ansprüche 1 oder 2, **dadurch gekennzeichnet, dass** mindestens ein Bypasskanal (146) des zweiten Teils (126) der Umschaltvorrichtung (110) in einen Bypass-Sammelkanal (166) mündet, der an dem ersten Teil (114) der Umschaltvorrichtung (110) vorgesehen ist.

4. Umschaltvorrichtung nach einem der Ansprüche 1 bis 3, **dadurch gekennzeichnet, dass** der erste Teil (114) und der zweite Teil (126) der Umschaltvorrichtung (110) relativ zueinander drehbar sind.

5. Umschaltvorrichtung nach Anspruch 4, **dadurch gekennzeichnet, dass** der erste Teil (114) radial innerhalb des zweiten Teils (126) der Umschaltvorrichtung (110) angeordnet ist.

6. Umschaltvorrichtung nach einem der Ansprüche 4 oder 5, **dadurch gekennzeichnet, dass** der Zuführkanal (132) einen Anfangsabschnitt (134) umfasst, der mit einer Hochdruckmedium-Zufuhr in Fluidverbindung steht und im Wesentlichen koaxial zur Längsachse (128), um welche der erste Teil (114) und der zweite Teil (126) der Umschaltvorrichtung (110) relativ zueinander drehbar sind, verläuft.

7. Umschaltvorrichtung nach einem der Ansprüche 4 bis 6, **dadurch gekennzeichnet, dass** der Zuführkanal (132) einen im Wesentlichen radial verlaufenden Endabschnitt (136) umfasst, der in der ersten Stellung der Umschaltvorrichtung (110) in den ersten Abführkanal (138a) mündet.

8. Umschaltvorrichtung nach einem der Ansprüche 1 bis 7, **dadurch gekennzeichnet, dass** die Umschaltvorrichtung (110) eine Antriebsvorrichtung zum Antreiben einer Relativbewegung zwischen dem ersten Teil (114) und dem zweiten Teil (126) der Umschaltvorrichtung (110) umfasst, wobei die Antriebsvorrichtung eine Drehantriebsvorrichtung (175; 197) umfasst.

9. Umschaltvorrichtung nach einem der Ansprüche 1 bis 8, **dadurch gekennzeichnet, dass** der erste Teil (114) der Umschaltvorrichtung (110) ortsfest angeordnet ist.

10. Umschaltvorrichtung nach einem der Ansprüche 1 bis 8, **dadurch gekennzeichnet, dass** der zweite Teil (126) der Umschaltvorrichtung (110) ortsfest angeordnet ist.

11. Umschaltvorrichtung nach einem der Ansprüche 1 bis 10, **dadurch gekennzeichnet, dass** an dem zweiten Teil (126) der Umschaltvorrichtung (110) mindestens ein Hochdruckwerkzeug (112) angeordnet ist.

12. Umschaltvorrichtung nach Anspruch 11, **dadurch gekennzeichnet, dass** mindestens ein Hochdruckwerkzeug (112) um eine Rotationsachse (176) drehbar an dem zweiten Teil (126) der Umschaltvorrichtung (110) angeordnet ist,
wobei die Umschaltvorrichtung (110) eine Rotationsantriebsvorrichtung (182) zum Antreiben einer Rotationsbewegung mindestens eines drehbar an dem zweiten Teil (126) angeordneten Hochdruckwerkzeugs (112) um dessen Rotationsachse (176) umfasst und
wobei an dem zweiten Teil (126) der Umschaltvorrichtung (110) mehrere Hochdruckwerkzeuge (112) angeordnet sind, die abwechselnd in eine Arbeitsstellung bringbar sind, in welcher das in Arbeitsstellung befindliche Hochdruckwerkzeug (112) mit dem Zuführkanal (132) in Fluidverbindung steht,
wobei die Rotationsantriebsvorrichtung (182) mit dem jeweils in Arbeitsstellung befindlichen Hochdruckwerkzeug (112) zum Antreiben einer Rotationsbewegung dieses Hochdruckwerkzeugs (112) um dessen Rotationsachse (176) koppelbar ist.

13. Umschaltvorrichtung nach einem der Ansprüche 1 bis 12, **dadurch gekennzeichnet, dass** die Umschaltvorrichtung (110) kein Ventil zum Absperren der Abführkanäle (138) aufweist.

14. Hochdruckanlage zur Reinigung und/oder zur Bearbeitung von Werkstücken (102) mittels eines Hochdruckmediums, umfassend mindestens eine Umschaltvorrichtung (110) nach einem der Ansprüche 1 bis 13.

15. Verfahren zum Umschalten von mindestens zwei Hochdruckwerkzeugen (112) von einem Ruhezustand in einen Arbeitszustand und von dem Arbeitszustand in den Ruhezustand, umfassend folgende Verfahrensschritte:
- Zuführen eines Hochdruckmediums zu einem ersten Hochdruckwerkzeug (112a) durch eine Umschaltvorrichtung (110), welche einen ersten Teil (114) mit einem Zuführkanal (132) für das Hochdruckmedium und einen zweiten Teil (126) mit mindestens zwei Abführkanälen (138) für das Hochdruckmedium umfasst, in einer ersten Stellung der Umschaltvorrichtung (110), in welcher ein erster Abführkanal (138a) mit dem Zuführkanal (132) und mit dem ersten Hochdruckwerkzeug (112a) in Fluidverbindung steht und ein zweiter Abführkanal (138b) mit dem zweiten Hochdruckwerkzeug (112b) in Fluidverbindung steht, aber von dem Zuführkanal (132) getrennt ist; und
- Überführen der Umschaltvorrichtung (110) von der ersten Stellung in eine zweite Stellung, in welcher der erste Abführkanal (138a) von dem Zuführkanal (132) getrennt ist und der zweite Abführkanal (138b) mit dem Zuführkanal (132) in Fluidverbindung steht,
**dadurch gekennzeichnet,**
**dass** der zweite Teil (126) der Umschaltvorrichtung (110) mindestens einen Bypasskanal (146) umfasst, der während der Überführung der Umschaltvorrichtung (110) von der ersten Stellung in die zweite Stellung zumindest zeitweise mit dem Zuführkanal (132) in Fluidverbindung steht.

## Claims

1. Switchover apparatus for high-pressure tools, by means of which at least two high-pressure tools (112) are switchable from an idle state to an operative state and from the operative state to the idle state, wherein the switchover apparatus (110) comprises a first part (114) having a feed channel (132) for a high-pressure medium and a second part (126) having at least two discharge channels (138) for the high-pressure medium and
wherein the first part (114) and the second part (126) are movable relative to one another in such a way that the switchover apparatus (110) is transferable from a first position, in which a first discharge channel (138a) is fluidically connected to the feed channel (132) and to a first high-pressure tool (112a) and a second discharge channel (138b) is fluidically connected to a second high-pressure tool (112b) but is separated from the feed channel (132), into a second position, in which the first discharge channel (138a) is separated from the feed channel (132) and the second discharge channel (138b) is fluidically connected to the feed channel (132),
**characterized in**
**that** the second part (126) comprises at least one bypass channel (146), which during the transfer of the switchover apparatus (110) from the first position into the second position is at least at times fluidically connected to the feed channel (132).

2. Switchover apparatus according to claim 1, **characterized in that** the bypass channel (146) is separated from the feed channel (132) when the switchover apparatus (110) is in the first position or the second position.

3. Switchover apparatus according to one of claims 1 or 2, **characterized in that** at least one bypass channel (146) of the second part (126) of the switchover apparatus (110) opens out into a bypass collecting channel (166), which is provided on the first part (114) of the switchover apparatus (110).

4. Switchover apparatus according to one of claims 1 to 3, **characterized in that** the first part (114) and the second part (126) of the switchover apparatus (110) are rotatable relative to one another.

5. Switchover apparatus according to claim 4, **characterized in that** the first part (114) is disposed radially inside the second part (126) of the switchover apparatus (110).

6. Switchover apparatus according to one of claims 4 or 5, **characterized in that** the feed channel (132) comprises an initial portion (134), which is fluidically connected to a high-pressure medium supply and extends substantially coaxially with the longitudinal axis (128), about which the first part (114) and the second part (126) of the switchover apparatus (110) are rotatable relative to one another.

7. Switchover apparatus according to one of claims 4 to 6, **characterized in that** the feed channel (132) comprises a substantially radially extending final portion (136), which in the first position of the switchover apparatus (110) opens out into the first discharge channel (138a).

8. Switchover apparatus according to one of claims 1 to 7, **characterized in that** the switchover apparatus (110) comprises a drive apparatus for driving a relative movement between the first part (114) and the second part (126) of the switchover apparatus (110), wherein the drive apparatus comprises a rotary drive apparatus (175; 197).

9. Switchover apparatus according to one of claims 1 to 8, **characterized in that** the first part (114) of the switchover apparatus (110) is disposed in a stationary manner.

10. Switchover apparatus according to one of claims 1 to 8, **characterized in that** the second part (126) of the switchover apparatus (110) is disposed in a stationary manner.

11. Switchover apparatus according to one of claims 1 to 10, **characterized in that** on the second part (126) of the switchover apparatus (110) there is disposed at least one high-pressure tool (112).

12. Switchover apparatus according to claim 11, **characterized in that** at least one high-pressure tool (112) is disposed on the second part (126) of the switchover apparatus (110) so as to be rotatable about an axis of rotation (176),
wherein the switchover apparatus (110) comprises a rotary drive apparatus (182) for setting at least one high-pressure tool (112), which is disposed rotatably on the second part 126), in rotation about the axis of rotation (176) thereof and
wherein on the second part (126) of the switchover apparatus (110) there are disposed a plurality of high-pressure tools (112), which may be brought alternately into an operative position, in which the high-pressure tool (112) situated in operative position is fluidically connected to the feed channel (132),
wherein the rotary drive apparatus (182) can be coupled to the respective high-pressure tool (112) situated in operative position in order to set said high-pressure tool (112) in rotation about the axis of rotation (176) thereof.

13. Switchover apparatus according to one of claims 1 to 12, **characterized in that** the switchover apparatus (110) has no valve for shutting off the discharge channels (138).

14. High-pressure installation for cleaning and/or for processing workpieces (102) by means of a high-pressure medium, comprising at least one switchover apparatus (110) according to one of claims 1 to 13.

15. Method of switching at least two high-pressure tools (112) from an idle state into an operative state and from the operative state into the idle state, comprising the following method steps:
- feeding a high-pressure medium to a first high-pressure tool (112a) by means of a switchover apparatus (110), which comprises a first part (114) having a feed channel (132) for the high-pressure medium and a second part (126) having at least two discharge channels (138) for the high-pressure medium, in a first position of the switchover apparatus (110), in which a first discharge channel (138a) is fluidically connected to the feed channel (132) and to the first high-pressure tool (112a) and a second discharge channel (138b) is fluidically connected to the second high-pressure tool (112b) but is separated from the feed channel (132); and
- transferring the switchover apparatus (110) from the first position into a second position, in which the first discharge channel (138a) is separated from the feed channel (132) and the second discharge channel (138b) is fluidically connected to the feed channel (132),
**characterized in that**
the second part (126) of the switchover apparatus (110) comprises at least one bypass channel (146), which during the transfer of the switchover apparatus (110) from the first position into the second position is at least at times fluidically connected to the feed channel (132).

## Revendications

1. Barillet d'outils pour dispositif haute pression, à l'aide duquel au moins deux dispositifs haute pression (112) peuvent être commutés d'un état de repos à un état de travail et de l'état de travail à l'état de repos,
■ le barillet d'outils (110) comprenant une première partie (114) avec un canal d'amenée (132) pour un produit haute pression et une deuxième partie (126) avec au moins deux canaux d'évacuation (138) pour le produit haute pression et
■ la première partie (114) et la deuxième partie (126) pouvant être déplacées de manière relative l'une par rapport à l'autre de sorte que le barillet d'outils (110) puisse être transféré d'une première position, dans laquelle un premier canal d'évacuation (138a) est en liaison fluidique avec le canal d'amenée (132) et avec un premier dispositif haute pression (112a) et un deuxième canal d'évacuation (138b) est en liaison fluidique avec un deuxième dispositif haute pression (112b) mais est séparé du canal d'amenée (132), à une deuxième position, dans laquelle le premier canal d'évacuation (138a) est séparé du canal d'amenée (132) et le deu-xième canal d'évacuation (138b) est en liaison fluidique avec le canal d'amenée (132),
**caractérisé en ce que** la deuxième partie (126) comprend au moins un canal de dérivation (146) qui est en liaison fluidique pendant le transfert du barillet d'outils (110) de la première position à la deuxième position au moins temporairement avec le canal d'amenée (132).

2. Barillet d'outils selon la revendication 1, **caractérisé en ce que** le canal de dérivation (146) est séparé du canal d'amenée (132) si le barillet d'outils (110) se trouve dans la première posi-tion ou la deuxième position.

3. Barillet d'outils selon l'une quelconque des revendications 1 ou 2, **caractérisé en ce qu'**au moins un canal de dérivation (146) de la deuxième partie (126) du barillet d'outils (110) débouche dans un canal collecteur de dérivation (166) qui est prévu sur la première partie (114) du barillet d'outils (110).

4. Barillet d'outils selon l'une quelconque des revendications 1 à 3, **caractérisé en ce que** la première partie (114) et la deuxième partie (126) du barillet d'outils (110) peuvent être tournées de manière relative l'une par rapport à l'autre.

5. Barillet d'outils selon la revendication 4, **caractérisé en ce que** la première partie (114) est disposée radialement dans la deuxième partie (126) du barillet d'outils (110).

6. Barillet d'outils selon l'une quelconque des revendications 4 ou 5, **caractérisé en ce que** le canal d'amenée (132) comprend une section de départ (134) qui est en liaison fluidique avec une amenée de produit haute pression et s'étend essentiellement coaxialement à l'axe longitudinal (128), autour duquel peuvent être tournées de manière relative l'une par rapport à l'autre la première partie (114) et la deuxième partie (126) du barillet d'outils (110).

7. Barillet d'outils selon l'une quelconque des revendications 4 à 6, **caractérisé en ce que** le canal d'amenée (132) comprend une section d'extrémité (136) s'étendant essentiellement radialement qui débouche, dans la première position du barillet d'outils (110), dans le premier canal d'évacuation (138a).

8. Barillet d'outils selon l'une quelconque des revendications 1 à 7, **caractérisé en ce que** le barillet d'outils (110) comprend un dispositif d'entraînement pour l'entrainement d'un mouvement relatif entre la première partie (114) et la deuxième partie (126) du barillet d'outils (110), le dispositif d'entraînement comprenant un dispositif d'entraînement rotatif (175 ; 197).

9. Barillet d'outils selon l'une quelconque des revendications 1 à 8, **caractérisé en ce que** la première partie (114) du barillet d'outils (110) est disposée fixement.

10. Barillet d'outils selon l'une quelconque des revendications 1 à 8, **caractérisé en ce que** la deuxième partie (126) du barillet d'outils (110) est disposée fixement.

11. Barillet d'outils selon l'une quelconque des revendications 1 à 10, **caractérisé en ce qu'**au moins un dispositif haute pression (112) est disposé sur la deuxième partie (126) du barillet d'outils (110).

12. Barillet d'outils selon la revendication 11, **caractérisé en ce qu'**au moins un dispositif haute pression (112) est disposé de manière à pouvoir tourner autour d'un axe de rotation (176) sur la deuxième partie (172) du barillet d'outils (110),
■ le barillet d'outils (110) comprenant un dispositif d'entraînement en rotation (182) pour l'entraînement d'un mouvement de rotation au moins d'un dispositif haute pression (112) disposé de manière à pouvoir tourner sur la deuxième partie (126) autour de son axe de rotation (176) et
■ sur la deuxième partie (126) du barillet d'oùtils (110) étant disposés plusieurs dispositifs haute pression (112) qui peuvent être amenés en alternance en position de travail, dans laquelle le dispositif haute pression (112) se trouvant en position de travail est en liaison fluidique avec le canal d'amenée (132),
■ le dispositif d'entraînement en rotation (182) pouvant être couplé au dispositif haute pression (112) se trouvant respectivement en position de travail pour l'entraînement d'un mouvement de rotation de ce dispositif haute pression (112) autour de son axe de rotation (176).

13. Barillet d'outils selon l'une quelconque des revendications 1 à 12, **caractérisé en ce que** le barillet d'outils (110) ne présente pas de soupape pour bloquer les canaux d'évacuation (138).

14. Installation haute pression pour le nettoyage et/ou pour l'usinage de pièces à usiner (102) à l'aide d'un produit haute pression, comprenant au moins un barillet d'outils (110) selon l'une quelconque des revendications 1 à 13.

15. Procédé pour la commutation d'au moins deux dispositifs haute pression (112) d'un état de repos à un état de travail et de l'état de travail à l'état de repos, comprenant les étapes de procédé suivantes :
■ amenée d'un produit haute pression à un premier dispositif haute pression (112a) par un barillet d'outils (110) qui comprend une première partie (114) avec un canal d'amenée (132) pour le produit haute pression et une deuxième partie (126) avec au moins deux canaux d'évacuation (138) pour le produit haute pression, dans une première position du barillet d'outils (110), dans laquelle un premier canal d'évacuation (138a) est en liaison fluidique avec le canal d'évacuation (132) et avec le premier dispositif haute pression (112a) et un deuxième canal d'évacuation (138b) est en liaison fluidique avec le deuxième dispositif haute pression (112b) mais est séparé du canal d'amenée (132) ; et
■ transfert du barillet d'outils (110) de la première position à une deuxième position, dans laquelle le premier canal d'évacuation (138a) est séparé du canal d'amenée (132) et le deuxième canal d'évacuation (138b) est en liaison fluidique avec le canal d'amenée (132), **caractérisé en ce que** la deuxième partie (126) du barillet d'outils (110) comporte au moins un canal de dérivation (146) qui est en liaison fluidique pendant le transfert du barillet d'oùtils (110) de la première position à la deuxième position au moins temporairement avec le canal d'évacuation (132).
